(19) **Europäisches Patentamt / European Patent Office / Office européen des brevets**

(11) **EP 4 779 167 A1**

(12) # EUROPEAN PATENT APPLICATION
published in accordance with Art. 153(4) EPC

(43) Date of publication:
**22.07.2026 Bulletin 2026/30**

(21) Application number: **24900950.7**

(22) Date of filing: **26.11.2024**

(51) International Patent Classification (IPC):
**F16D 1/076** (2006.01)  **B60B 27/00** (2006.01)
**F16D 1/10** (2006.01)

(52) Cooperative Patent Classification (CPC):
**B60B 27/00; F16D 1/076; F16D 1/10**

(86) International application number:
**PCT/KR2024/018825**

(87) International publication number:
**WO 2025/121763 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.12.2023 KR 20230174289**

(71) Applicant: **Hansae Mobility Co., Ltd.
Daegu 42981 (KR)**

(72) Inventors:
• **JANG, Dal Soo
Dalseong-Gun Daegu 42981 (KR)**
• **LEE, Hyun Woo
Dalseong-Gun Daegu 42981 (KR)**

(74) Representative: **Manitz Finsterwald
Patent- und Rechtsanwaltspartnerschaft mbB
Martin-Greif-Straße 1
80336 München (DE)**

(54) **FACE SPLINE STRUCTURE, AND POWER TRANSMISSION DEVICE INCLUDING DRIVE SHAFT AND WHEEL HUB ASSEMBLY COUPLED TO EACH OTHER VIA FACE SPLINE STRUCTURE**

(57) The present disclosure relates to a face spline structure used for transmitting driving force of a vehicle, and a power transmission device including a drive shaft and a wheel hub assembly coupled to each other by the face spline structure. The face spline structure includes a first face spline and a second face spline meshed with each other to enable transmission of rotational power. A first clearance between a peak of the first face spline and a root of the second face spline meshed therewith, and a second clearance between a peak of the second face spline and a root of the first face spline meshed therewith, are each in a range of 0.2 mm to 0.7 mm.

[FIG. 3]

EP 4 779 167 A1

**Description**

[Technical Field]

The present disclosure relates to a face spline structure used for transmitting driving force of a vehicle, and a power transmission device including a drive shaft and a wheel hub assembly coupled to each other by the face spline structure.

[Background Art]

A constant velocity joint, which is a power transmission member, is a component constituting a part of a drive system that transmits driving force generated from a power source of a vehicle, for example, an internal combustion engine or an electric motor, to a wheel. As is well known, the constant velocity joint is configured to transmit rotational driving force while absorbing displacements in various directions occurring during driving of the vehicle, and may be implemented in various forms such as a Rzeppa joint.
The constant velocity joint may be connected to a wheel hub to enable power transmission, and the constant velocity joint and the wheel hub are typically connected to each other through a spline structure so as to rotate together.
While it is common to connect a constant velocity joint and a wheel hub through a spline formed to extend in an axial direction of the constant velocity joint, a method has recently been introduced for power-coupling the constant velocity joint and the wheel hub through a spline formed on a surface perpendicular to the axial direction of the constant velocity joint, a so-called "face spline." In the method using the face spline, the constant velocity joint and the wheel hub are connected to each other to rotate together through face splines respectively formed on surfaces of the constant velocity joint and the wheel hub that face each other.
In a coupling using such a face spline, teeth respectively formed on surfaces perpendicular to the axial direction of the constant velocity joint of the drive shaft and a wheel hub facing the constant velocity joint are meshed with each other. When the face splines of the constant velocity joint and the wheel hub are coupled, wear may occur on tooth surfaces during driving in a state where peaks and roots of the teeth are in contact with each other, and this adversely affects Noise, Vibration, and Harshness (NVH).
The matters described in the section of the background art of the invention are intended to enhance understanding of the background of the invention, and may include matters that are not prior art already known in the field to which the technology pertains.

<Prior Art Documents>

- Korean Patent Registration No. 10-1960098
- Korean Patent Registration No. 10-2001883
- Korean Patent Registration No. 10-1573923
- Korean Patent Registration No. 10-1696907

[Summary of the Invention]

[Technical Problem]

An object of the present disclosure is to provide a method for minimizing wear and increasing durability of face splines of a constant velocity joint of a drive shaft and a wheel hub.
The technical problems to be solved by the present disclosure are not limited to the technical problems mentioned above, and other technical problems not mentioned will be understood by those skilled in the art from the following description.

[Technical Solutions]

A face spline structure according to an embodiment of the present disclosure includes a first face spline and a second face spline meshed with each other to enable transmission of rotational power. A first clearance between a peak of the first face spline and a root of the second face spline meshed therewith, and a second clearance between a peak of the second face spline and a root of the first face spline meshed therewith, are each in a range of 0.2 mm to 0.7 mm.
The first clearance and the second clearance may be equal to each other.

The first clearance and the second clearance may be configured to have a minimum value of at least 2 mm during the progress of wear of the first and second face splines.

A ratio of a tooth height of the first face spline to a tooth height of the second face spline may be in a range of 1.0 to 1.2.

In a state where the first and second face splines are meshed with each other, a tooth thickness of the first face spline may be formed to be greater than an inter-tooth distance of the second face spline at a half-height point of the tooth height of the second face spline.

In a state where the first and second face splines are meshed with each other, a ratio of the tooth thickness of the first face spline to the inter-tooth distance of the second face spline at a half-height point of the tooth height of the second face spline may be in a range of 1 to 1.2.

Each of the first face spline and the second face spline may include inclined surfaces connecting the peak and the root, and the first face spline and the second face spline may be configured to transmit the rotational power through contact of the inclined surfaces.

A power transmission device according to an embodiment of the present disclosure includes: a drive shaft including a constant velocity joint having a first face spline; and a wheel hub assembly including a wheel hub having a second face spline meshed with the first face spline to enable transmission of rotational power. A first clearance between a peak of the first face spline and a root of the second face spline meshed therewith, and a second clearance between a peak of the second face spline and a root of the first face spline meshed therewith, are each in a range of 0.2 mm to 0.7 mm.

[Effects of the Invention]

According to the present disclosure, wear of the face splines of the constant velocity joint of the drive shaft and the wheel hub can be minimized, and durability can be increased. In particular, contact between the peak and the root meshed with each other is blocked, thereby preventing wear and increasing durability.

In addition, various effects that can be obtained or predicted by the embodiments of the present disclosure are disclosed directly or implicitly in the detailed description of the embodiments of the present disclosure.

[Brief Description of the Drawings]

The accompanying drawings, which are included below to provide a further understanding of the present disclosure, provide embodiments of the present disclosure along with the detailed description. However, the technical features of the present disclosure are not limited to specific drawings, and the features disclosed in each drawing may be combined with each other to constitute new embodiments. The embodiments of the present specification will be better understood with reference to the following description in connection with the accompanying drawings, in which similar reference numerals refer to the same or functionally similar elements.

FIG. 1 is a perspective view of a drive shaft to which a spline structure according to an embodiment of the present disclosure is applied.

FIG. 2 is a perspective view showing a power transmission device, which is an assembly of a drive shaft and a wheel hub assembly to which a face spline structure according to an embodiment of the present disclosure is applied.

FIG. 3 is an exploded perspective view showing a disassembled state of the drive shaft and the wheel hub assembly to which the face spline structure according to an embodiment of the present disclosure is applied.

FIG. 4 is a sectional view showing a state in which first and second face splines of the face spline structure according to an embodiment of the present disclosure are meshed with each other.

FIG. 5 is a view for explaining a change in clearance between a peak and a root according to wear of inclined surfaces of the face spline structure according to an embodiment of the present disclosure.

FIG. 6 is a view for explaining a relationship between tooth heights of meshing teeth of the face spline structure according to an embodiment of the present disclosure.

FIG. 7 is a view for explaining a relationship between a tooth thickness and an inter-tooth distance of meshing teeth in the face spline structure according to an embodiment of the present disclosure.

It should be understood that the drawings referenced above are not necessarily drawn to scale, but rather present a simplified representation of various features illustrating the basic principles of the invention. For example, specific design features of the present invention, including specific dimensions, orientations, locations, and shapes, will be determined in part by the particular intended application and use environment.

[Embodiment for Carrying out the Invention]

Hereinafter, embodiments of the present disclosure will be described in detail with reference to the accompanying drawings so that those skilled in the art to which the present disclosure pertains can easily implement the same. However, the present disclosure may be implemented in many different forms and is not limited to the embodiments described herein.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, components, and/or groups thereof. As used herein, the term "and/or" includes any and all combinations of any one or more of the associated listed items. The term "coupled" denotes a physical relationship between two components in which the components are directly connected to each other or indirectly connected through one or more intervening components.

In describing the components of the present disclosure, terms such as first, second, A, B, (a), and (b) may be used. These terms are used only to distinguish one component from another, and the nature, order, or sequence of the corresponding components are not limited by these terms. When a component is described as being "connected," "coupled," or "joined" to another component, it should be understood that the component may be directly connected, coupled, or joined to the other component, but another component may also be "connected," "coupled," or "joined" between the respective components.

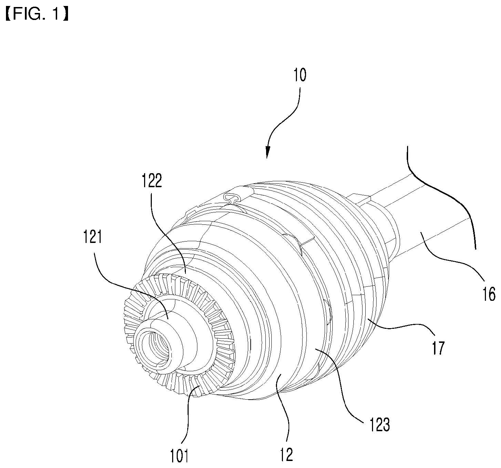

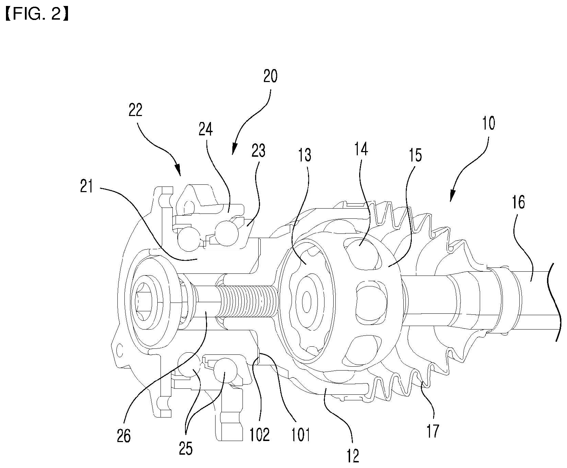

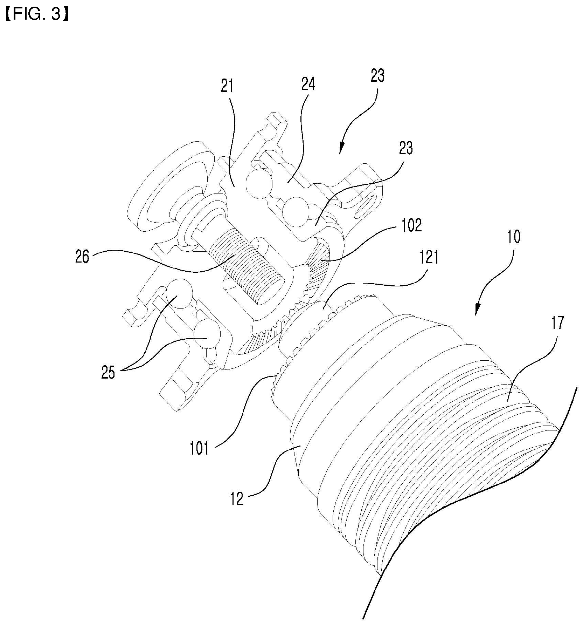

FIG. 1 is a perspective view of a drive shaft to which a spline structure according to an embodiment of the present disclosure is applied. FIG. 2 is a perspective view showing an assembly of a drive shaft and a wheel hub to which a face spline structure according to an embodiment of the present disclosure is applied, and FIG. 3 is an exploded perspective view showing a disassembled state of the drive shaft and the wheel hub to which the face spline structure according to an embodiment of the present disclosure is applied. In FIG. 2, a constant velocity joint 10 of the drive shaft and a wheel hub assembly 20 are shown in a partially cut-away state, and in FIG. 3, the wheel hub assembly 20 is shown in a partially cut-away state.

Referring to FIGS. 1 to 3, a constant velocity joint 10 to which a face spline structure according to an embodiment of the present disclosure may be applied may be a type of constant velocity joint so-called a Rzeppa joint, and includes an outer joint member 12, an inner joint member 13 disposed within the outer joint member 12, a plurality of power transmission balls 14 disposed between the outer joint member 12 and the inner joint member 13, and a ball cage 15 accommodating the plurality of power transmission balls 14. The power transmission balls 14 may be disposed in ball grooves respectively provided in the outer joint member 12 and the inner joint member 13, and may be configured to transmit rotational power of the inner joint member 13 to the outer joint member 12. A connecting shaft 16 is coupled to the inner joint member 13 to rotate together with the inner joint member 13. The constant velocity joint 10 may be coupled to one end of the connecting shaft 16, and another constant velocity joint (not shown) may be coupled to the other end of the connecting shaft 16. Typically, a power transmission device including the connecting shaft 16 and a pair of constant velocity joints coupled to both ends thereof is referred to as a drive shaft.

The outer joint member 12 may have a cup shape having a U-shaped cross-section with one side open, and the inner joint member 13 is disposed in an inner space of the outer joint member 12. A boot 17 may be coupled to the open-ended portion of the outer joint member 12 and the connecting shaft 16, respectively. Since the components and operating principles of such a constant velocity joint 10 are obvious to those skilled in the art, a detailed description thereof will be omitted.

For example, the wheel hub assembly 20 includes a wheel hub 21 and a rolling bearing 22. The wheel hub 21 has a substantially cylindrical shape, and the rolling bearing 22 rotatably supports the wheel hub 21. The rolling bearing 22 may include: an inner race 23 coupled by being axially fitted onto an outer circumferential surface of the wheel hub 21; an outer race 24 fixedly coupled to a stationary body of a vehicle, such as a vehicle body or a knuckle, while being positioned radially outward of the inner race 23; and ball-shaped rolling elements 25 interposed between the inner race 23 and the outer race 24, or between the wheel hub 21 and the outer race 24. As shown in FIGS. 2 and 3, a plurality of rolling elements 25 may be arranged in two rows.

A fastening bolt 26 fastens the wheel hub 21 and the outer joint member 12 to each other to be axially fixed. The outer joint member 12 may include a shaft portion 121, a shoulder portion 122, and a mouth portion 123, and the fastening bolt 26 may be fastened to the shaft portion 121. Meanwhile, the wheel hub 21 and the outer joint member 12 are respectively provided with face splines 101 and 102, and are coupled to each other to rotate together through meshing of the face splines 101 and 102.

The face spline 101 of the outer joint member 12 may be formed on an outer circumferential surface of the shoulder portion 122 so as to face the wheel hub 21. Further, the face spline 102 of the wheel hub 21 is formed on a surface facing the face spline 101 of the outer joint member 12. As the outer joint member 12 and the wheel hub 21 are coupled to each other in a state of being rotationally constrained through the face splines 101 and 102, the wheel hub 21 is rotated by rotation of the outer joint member 12. Thereby, rotational power of the constant velocity joint 10 may be transmitted to the wheel hub 21.

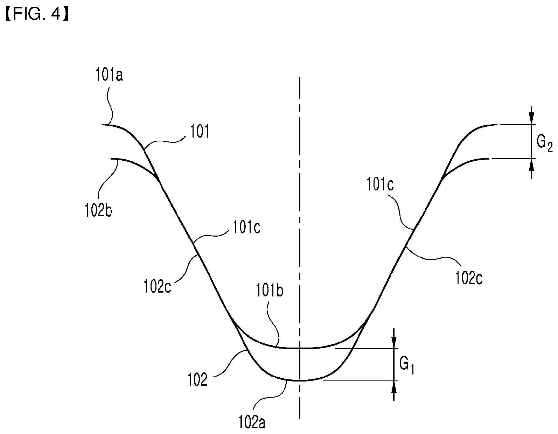

FIG. 4 is a sectional view showing a state in which first and second face splines of the face spline structure according to an embodiment of the present disclosure are meshed with each other. In FIG. 4, the first face spline 101 may be a face spline formed on the outer joint member 12 of the constant velocity joint 10, and the second face spline 102 may be a face spline formed on the wheel hub 21 of the wheel hub assembly 20.

The first face spline 101 and the second face spline 102 may have similar shapes. For example, a tooth of the first face spline 101 may include a root 101a, a peak 101b, and an inclined surface 101c connecting the root 101a and the peak 101b. Similarly, a tooth of the second face spline 102 may include a root 102a, a peak 102b, and an inclined surface 102c connecting the root 102a and the peak 102b. The first face spline 101 and the second face spline 102 are inserted such that the peaks 101b and 102b approach the roots 102a and 101a on the opposite side, and at this time, in a meshed state, at least a portion of the inclined surfaces 101c and 102c are in surface contact with each other. Here, the first face spline 101 and the second face spline 102 are configured such that the peaks 101b and 102b do not touch the roots 102a and 101a facing them.

According to an embodiment of the present disclosure, referring to FIG. 4, a clearance G1 is formed between the peak 101b of the first face spline 101 and the root 102a of the second face spline 102, and a clearance G2 is formed between the peak 102b of the second face spline 102 and the root 101a of the first face spline 101. Here, the clearances G1 and G2 may each be in a range of 0.2 mm to 0.7 mm. Further, the clearances G1 and G2 may be equal to each other. Here, the values of the clearances G1 and G2 may be nominal values.

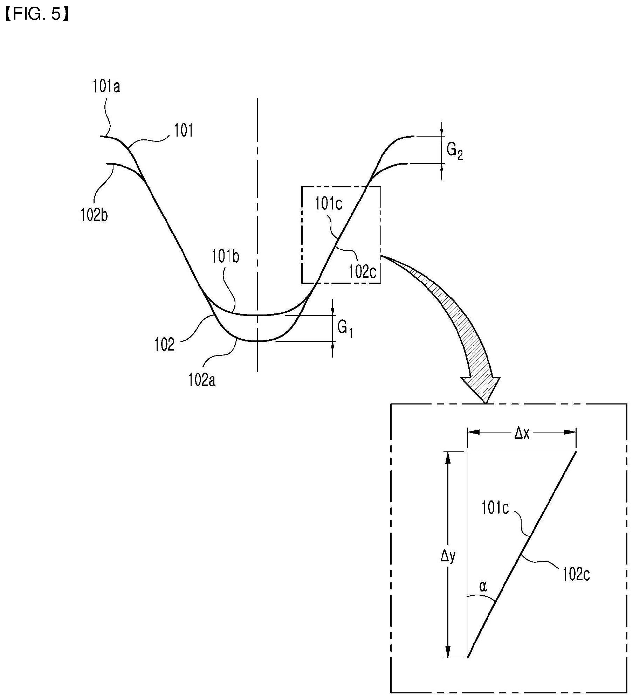

As a vehicle is driven, wear occurs on the inclined surfaces 101c and 102c that are in contact with each other, and as the wear progresses, the clearances G1 and G2 between the peaks 101b and 102b and the roots 101a and 102a facing each other decrease. In an embodiment of the present disclosure, the clearances G1 and G2 between the peaks 101b and 102b and the roots 101a and 102a facing each other are configured to be maintained at a minimum threshold value, for example, 0.2 mm or more, during the progress of wear. FIG. 5 illustrates a relationship for calculating a reduction amount of the clearance G1 between the peak 101b and the root 102a according to the wear of the inclined surfaces 101c and 102c. Referring to FIG. 5, a reduction amount y of the clearance G1 between the peak 101b and the root 102a may be calculated from a wear amount x of the inclined surfaces 101c and 102c of the teeth and an inclination angle $\alpha$ of the inclined surfaces 101c and 102c by the following Equation 1.

【Equation 1】

$$y = \frac{x}{\tan\alpha}$$

For example, when the inclination angle ($\alpha$) of the inclined surfaces 101c and 102c is 27.5 degrees, the reduction amount (y) of the clearance G1 between the peak 101b and the root 102a according to the wear amount (x) of the inclined surfaces 101c and 102c may be calculated as the values shown in the following Table 1 by the above Equation 1.

[Table 1]

| Item | Wear amount (x, mm) | | | | | |
|---|---|---|---|---|---|---|
| | 0.05 | 0.15 | 0.25 | 0.10 | 0.20 | 0.30 |
| Reduction amount (y, mm) | 0.095 | 0.288 | 0.480 | 0.192 | 0.385 | 0.577 |

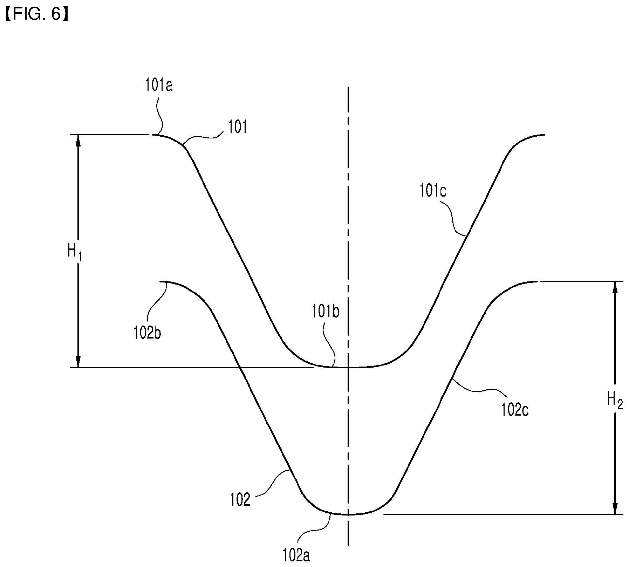

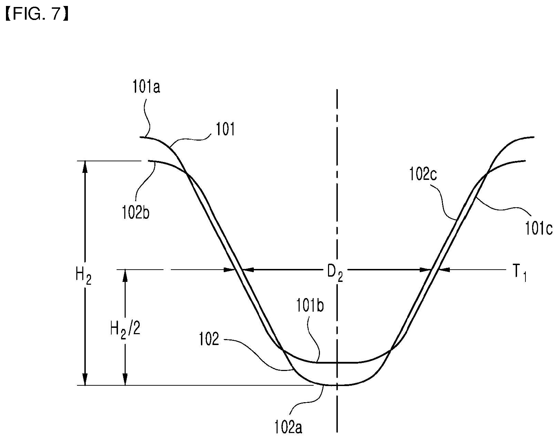

FIG. 6 is a view for explaining a relationship between tooth heights of meshing teeth of the face spline structure according to an embodiment of the present disclosure. Referring to FIG. 6, a tooth height $H_1$ of the tooth of the first face spline 101, i.e., a distance between the root 101a and the peak 101b, and a tooth height $H_2$ of the tooth of the second face spline 102, i.e., a distance between the root 102a and the peak 102b, may be formed to be different from each other. For example, the tooth height $H_2$ of the tooth of the second face spline 102 may be greater than the tooth height H1 of the tooth of the first face spline 101 ($H_2 > H_1$). As a specific example, a ratio of the tooth height $H_2$ of the tooth of the second face spline 102 to the tooth height $H_1$ of the tooth of the first face spline 101 may be a value in a range of 1.0 to 1.2. FIG. 7 is a view for explaining a relationship between a tooth thickness and an inter-tooth distance of meshing teeth in the face spline structure according to an embodiment of the present disclosure. Referring to FIG. 7, at a half-height point of the tooth height, a tooth thickness $T_1$ of the first face spline 101 may be formed to be greater than an inter-tooth distance $D_2$ of the second face spline 102. Here, the tooth height refers to a vertical distance between the root and the peak of each tooth. Further, the half-height point of the tooth height refers to a half-height point of the height of the tooth of the face spline forming a valley between the teeth, and in FIG. 7, corresponds to a point at half the tooth height $H_2$ from the root 102a of the second face spline 102. As a specific example, at the half-height point of the tooth height of the tooth of the second face spline 102, a ratio of the tooth thickness $T_1$ of the first face spline 101 to the inter-tooth distance $D_2$ of the second face spline 102 may be in a range of 1 to 1.2. Through this, it is possible to prevent the peaks and the roots of the meshing teeth from touching each other. In FIG. 7, for better understanding, the first face spline 101 and the second face spline 102 are shown to overlap in a state before being meshed with each other; however, in an actually meshed state, the inclined surfaces of both teeth come into contact with each other due to the deformation of the teeth of the first face spline 101 and the second face spline 102.

Although the embodiments of the present disclosure have been described above, the scope of the present disclosure is not limited thereto and includes all changes and modifications that are easily changed by those skilled in the art to which the present disclosure pertains and are recognized as equivalents.

**Claims**

1.  A face spline structure comprising:

    a first face spline and a second face spline meshed with each other to enable transmission of rotational power, wherein a first clearance between a peak of the first face spline and a root of the second face spline meshed therewith, and a second clearance between a peak of the second face spline and a root of the first face spline meshed therewith, are each in a range of 0.2 mm to 0.7 mm.

2.  The face spline structure according to claim 1, wherein the first clearance and the second clearance are equal to each other.

3.  The face spline structure according to claim 1, wherein the first clearance and the second clearance are configured to have a minimum value of at least 0.2 mm during the progress of wear of the first and second face splines.

4.  The face spline structure according to claim 1, wherein a ratio of a tooth height of the first face spline to a tooth height of the second face spline is in a range of 1.0 to 1.2.

5.  The face spline structure according to claim 1, wherein, in a state in which the first and second face splines are meshed with each other, a tooth thickness of the first face spline at a half-height point of a tooth height of the second face spline is formed to be greater than an inter-tooth distance of the second face spline.

6.  The face spline structure according to claim 5, wherein, in the state in which the first and second face splines are meshed with each other, a ratio of the tooth thickness of the first face spline to the inter-tooth distance of the second face spline at the half-height point of the tooth height of the second face spline is in a range of 1 to 1.2.

7.  The face spline structure according to claim 1, wherein each of the first face spline and the second face spline includes an inclined surface connecting the peak and the root, and
    wherein the first face spline and the second face spline are configured to transmit the rotational power through contact of the inclined surfaces.

8.  A power transmission device comprising:

    a drive shaft including a constant velocity joint having a first face spline; and
    a wheel hub assembly comprising a wheel hub having a second face spline meshed with the first face spline to enable transmission of rotational power,
    wherein a first clearance between a peak of the first face spline and a root of the second face spline meshed therewith, and a second clearance between a peak of the second face spline and a root of the first face spline meshed therewith, are each in a range of 0.2 mm to 0.7 mm.

9.  The power transmission device according to claim 8, wherein the first clearance and the second clearance are equal to each other.

10. The power transmission device according to claim 8, wherein the first clearance and the second clearance are configured to have a minimum value of at least 0.2 mm during the progress of wear of the first and second face splines.

11. The power transmission device according to claim 8, wherein a ratio of a tooth height of the first face spline to a tooth height of the second face spline is in a range of 1.0 to 1.2.

12. The power transmission device according to claim 8, wherein, in a state in which the first and second face splines are meshed with each other, a tooth thickness of the first face spline at a half-height point of a tooth height of the second face spline is formed to be greater than an inter-tooth distance of the second face spline.

13. The power transmission device according to claim 12, wherein, in the state in which the first and second face splines are meshed with each other, a ratio of the tooth thickness of the first face spline to the inter-tooth distance of the second face spline at the half-height point of the tooth height of the second face spline is in a range of 1 to 1.2.

14. The power transmission device according to claim 8, wherein each of the first face spline and the second face spline includes an inclined surface connecting the peak and the root, and
wherein the first face spline and the second face spline are configured to transmit the rotational power through contact of the inclined surfaces.

【FIG. 1】

【FIG. 2】

【FIG. 3】

【FIG. 4】

【FIG. 5】

【FIG. 6】

【FIG. 7】

## INTERNATIONAL SEARCH REPORT

| International application No. |
| --- |
| **PCT/KR2024/018825** |

| A. | CLASSIFICATION OF SUBJECT MATTER |
| --- | --- |
| | **F16D 1/076**(2006.01)i; **B60B 27/00**(2006.01)i; **F16D 1/10**(2006.01)i |

According to International Patent Classification (IPC) or to both national classification and IPC

| B. | FIELDS SEARCHED |
| --- | --- |

Minimum documentation searched (classification system followed by classification symbols)

F16D 1/076(2006.01); B60B 27/00(2006.01); B60B 3/16(2006.01); B60B 35/12(2006.01); B60B 35/14(2006.01); B60B 35/18(2006.01); F16C 19/18(2006.01); F16C 35/063(2006.01); F16D 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 페이스(face), 스플라인(spline), 휠(wheel), 허브(hub), 갭(gap), 거리 (distance), 등속조인트(constant velocity joint)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2015-0122539 A (ILJIN GLOBAL CO., LTD.) 02 November 2015 (2015-11-02) See paragraphs [0001], [0081]-[0083], [0086] and [0088] and figures 1-6. | 1-4,7-11,14 |
| Y | | 5-6,12-13 |
| Y | KR 10-0374458 B1 (DANA CORPORATION) 09 May 2003 (2003-05-09) See paragraph [0018] and figures 1-4. | 5-6,12-13 |
| A | JP 2003-072308 A (NTN CORP.) 12 March 2003 (2003-03-12) See claim 1 and figures 1-2. | 1-14 |
| A | JP 2006-327289 A (NSK LTD.) 07 December 2006 (2006-12-07) See claim 1 and figure 1. | 1-14 |
| A | JP 2004-316922 A (NSK LTD.) 11 November 2004 (2004-11-11) See claim 1 and figure 1. | 1-14 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **20 February 2025** | **21 February 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018825**

| Patent document cited in search report | | | Publication date (day/month/year) | Patent family member(s) | | | Publication date (day/month/year) |
|---|---|---|---|---|---|---|---|
| KR | 10-2015-0122539 | A | 02 November 2015 | CN | 106255602 | A | 21 December 2016 |
| | | | | CN | 106255602 | B | 19 July 2019 |
| | | | | EP | 3135499 | A1 | 01 March 2017 |
| | | | | JP | 2017-517441 | A | 29 June 2017 |
| | | | | JP | 6496399 | B2 | 03 April 2019 |
| | | | | KR | 10-1573023 | B1 | 30 November 2015 |
| | | | | US | 10207536 | B2 | 19 February 2019 |
| | | | | US | 2017-0043617 | A1 | 16 February 2017 |
| | | | | WO | 2015-163574 | A1 | 29 October 2015 |
| KR | 10-0374458 | B1 | 09 May 2003 | BR | 9600238 | A | 23 December 1997 |
| | | | | CA | 2167771 | A1 | 28 July 1996 |
| | | | | CA | 2167771 | C | 18 May 2004 |
| | | | | GB | 2297372 | A | 31 July 1996 |
| | | | | GB | 2297372 | B | 20 May 1998 |
| | | | | KR | 10-1996-0029652 | A | 17 August 1996 |
| | | | | TW | 340899 | B | 21 September 1998 |
| | | | | US | 5720102 | A | 24 February 1998 |
| JP | 2003-072308 | A | 12 March 2003 | None | | | |
| JP | 2006-327289 | A | 07 December 2006 | None | | | |
| JP | 2004-316922 | A | 11 November 2004 | None | | | |

Form PCT/ISA/210 (patent family annex) (July 2022)

**REFERENCES CITED IN THE DESCRIPTION**

**Patent documents cited in the description**

- KR 101960098
- KR 102001883
- KR 101573923
- KR 101696907